# EUROPEAN PATENT SPECIFICATION

(11) **EP 1 324 623 B1**
(45) Date of publication and mention of the grant of the patent: **18.10.2006**
(21) Application number: 02293171.1
(22) Date of filing: 19.12.2002
(51) Int. Cl.: H04Q 3/00, H04L 12/24, H04L 29/06

(54) **Provisioning subscriber services using service profiles in a communication network**
Bereitstellung von Teilnehmerdiensten unter Verwendung von Dienstprofilen in einem Kommunikationsnetz
Provision de services d'abonnés utilisant des profiles de service dans un réseau de communication

(30) Priority: 19.12.2001 CA 2365685; 11.10.2002 US 268894
(43) Date of publication of application: 02.07.2003
(73) Proprietor: Alcatel Canada Inc., Ottawa, Ontario K2K 2E6 (CA)
(72) Inventor: Radi, Tarek, Kanata, Ontario K2K 2V2 (CA); Charbonneau, Martin R., Ottawa, Ontario K2L 2E4 (CA); Petti, Antonio, Kanata, Ontario K2L 2V3 (CA); Clark, Patricia Mary, Ottawa, Ontario K1T 3P5 (CA); Trudeau, André Louis-Raymond, Jr., Ottawa, Ontario K2H 5R5 (CA)
(74) Representative: Feray, Valérie

(56) References cited:
- WO-A-01/19068
- WO-A-01/43390
- WO-A-01/88739
- US-A- 5 812 533

## Description

The invention relates generally to a system and method of provisioning subscriber services on an access node in a communications network.

In the prior art, when provisioning subscriber services on an access node in a communications network, it has been usual for a user to create one subscriber service at a time, setting all necessary attributes at the time of creation of each subscriber service. Certain subscriber information, including name, address, phone number, etc., is customer specific. However, many other specific and shared attributes may be needed to fully configure the subscriber service. Thus, depending on the total number of subscriber service attributes that need to be defined, manually creating one subscriber service at a time can be very time-consuming and can introduce opportunities for data entry error. Furthermore, when a change is performed on multiple subscriber services provisioned in this manner, updating each subscriber service individually may result in gross inefficiencies and introduce more opportunities for data entry error.

Thus, what is required is a method and system for provisioning subscriber services on a communications network which provides better efficiency when provisioning new subscriber services, and when making changes to a class or subclass of similar subscriber services.

An example of prior art corresponding to the preamble of claims 1 or 11 can be found in patent document US-A- 5 812 533.

Patent document WO-A 01.43390 discloses a portal interfacing between a wireless network domain and content/service providers on the internet. A generic subscriber class is used allowing subscriber profile management over different technologies and to provide customised services.

In a first aspect of the invention, there is provided a method and system of provisioning communication service attributes for a subscriber accessing a node in communication network as defined in claim 1 and 11, respectively based on:
(i) creating a profile of said communication service attributes, each of said attributes being assigned a value; and
(ii) selcctively associating said profile with a particular subscriber for access to said communication network.

In an embodiment of said first aspect, said profile of said communication service attributes is embodied in a subscriber service provisioning profile (SSPP) for storing shared subscriber service attributes that are common to a plurality of subscribers in a class; and
said subscriber accesses said communication network through a subscriber service, sa id subscriber service being associated with said SSPP.

In another embodiment of said first aspect, the method further comprises:
(iii) associating unique subscriber service attributes for said subscriber service.

In yet another embodiment of said first aspect, the further comprises:
(iv) commissioning said subscriber service on said node.

In a further embodiment of said first aspect, said shared subscriber service attributes includes a subscriber service profile (SSP).

In yet another embodiment of said first aspect, said shared subscriber service attributes further includes a closed user group (CUG) subscription.

In still another embodiment of said first aspect, said unique subscriber service attributes comprise an address and an access, said address and said access in combination uniquely identifying said new subscriber service.

In another embodiment of said first aspect, step (iii) comprises copying said shared subscriber service attributes to said new subscriber service.

In yet another embodiment of said first aspect, the method further comprises the step of amending at least some of said shared subscriber service attributes to make any said amended attributes unique to said subscriber service.

In a further embodiment of said first aspect, step (ii) comprises linking said shared subscriber service attributes stored in said SSPP to said subscriber service.

In still another embodiment of said first aspect, said method further comprises the step of modifying shared subscriber service attributes for any subscriber service linked to said SSPP by modifying said SSPP.

In a second aspect, the present invention provides a system for provisioning communication service attributes for a subscriber accessing a node in communication network, said system comprising:
(a) a database containing a profile of said communication service attributes, each of said attributes being assigned a value; and
(b) a subscriber application having access to said database for selectively associating said profile with a particular subscriber for access to said communication network.

In an embodiment of said second aspect, said profile of said communication service attributes is embodied in a subscriber service provisioning profile (SSPP) for storing shared subscriber service attributes that are common to a plurality of subscribers in a class; and
said subscriber accesses said communication network through a subscriber service, said subscriber service being associated with said SSPP.

In another embodiment of said second aspect, the system further comprises:
(c) a link to said database from a subscriber management application (SMA) for associating said shared subscriber service attributes from said SSPP to said subscriber service.

In still another embodiment of said second aspect, the system further comprises:
(d) a user input associated with said SMA for configuring unique subscriber service attributes for said new subscriber service.

In yet another embodiment of said second aspect, the system further comprises:
(e) a connection to said node from said SMA for commissioning said new subscriber service.

In another embodiment of said second aspect, said shared subscriber service attributes includes a subscriber service profile (SSP).

In still another embodiment of said second aspect, said shared subscriber service attributes further includes a closed user group (CUG) subscription.

In another embodiment of said second aspect, said unique subscriber service attributes comprise an address and an access, said address and said access in combination uniquely identifying said new subscriber service.

In a further embodiment of said second aspect, said link to said database allows said SMA to link said shared subscriber service attributes stored in said SSPP to said subscriber service.

In other aspects of the invention, various combinations and subsets of the above aspects are provided.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):
Fig. 1 is a block diagram of an exemplary communications network on which a subscriber service may be provisioned in accordance with an embodiment;
Fig. 2A is a block diagram showing the subscribers in Fig. 1 and an example of a type of access to the core network of Fig. 1;
Fig. 2B is a schematic diagram of a subscriber service and subscriber service provisioning profile in accordance with an embodiment;
Fig. 3A is a flow chart of a process for configuring a new subscriber service for the subscribers in Fig. 2A using a "Blank Form" option, in accordance with an embodiment;
Fig. 3B is a flow chart of a process for configuring a new subscriber service for subscribers in Fig. 2A using a "Copy from SSPP" option where SSPP 220 is a "subscriber service provisioning profile", in accor dance with an embodiment;
Fig. 3C is a flow chart of a process for configuring a new subscriber service for subscribers in Fig. 2A using a "Link to" option, in accordance with an embodiment;
Fig. 4 is a flow chart of a process for configuring an SSPP 220 for use with one of the processes of Figs. 3B and 3C, in accordance with an embodiment;
Fig. 5 is a flow chart of a process for configuring an access, in accordance with an embodiment;
Fig. 6 is a block diagram of an SVC service management application ("SVC-SMA") functional overview for provisioning subscriber services for the subscribers of Fig. 2A, in accordance with an embodiment;
Fig. 7 is an exemplary form for configuring a subscriber in Fig. 2A;
Fig. 8 is an exemplary form for configuring an access which may be associated with a subscriber service;
Fig. 9 is an exemplary form for configuring a subscriber service profile ("SSP") which may be associated with one or more subscriber services;
Fig. 10 is an exemplary form for configuring an address object which may be associated with a subscriber service;
Fig. 11 is an exemplary form for configuring an address translation profile ("ATP");
Fig. 12 is an exemplary form for configuring a closed user group ("CUG") interlock code ("-IC") profile which may be assoc iated with a subscriber service to create a CUG subscription;
Fig. 13 is an exemplary form for provisioning a subscriber service for a subscriber in Fig. 7; and
Fig. 14 is an exemplary form for configuring an SSPP.

### DETAILED DESCRIPTION OF THE INVENTION

As noted above, the present invention relates generally to a method and system for provisioning subscriber services on an access node in a communications network.

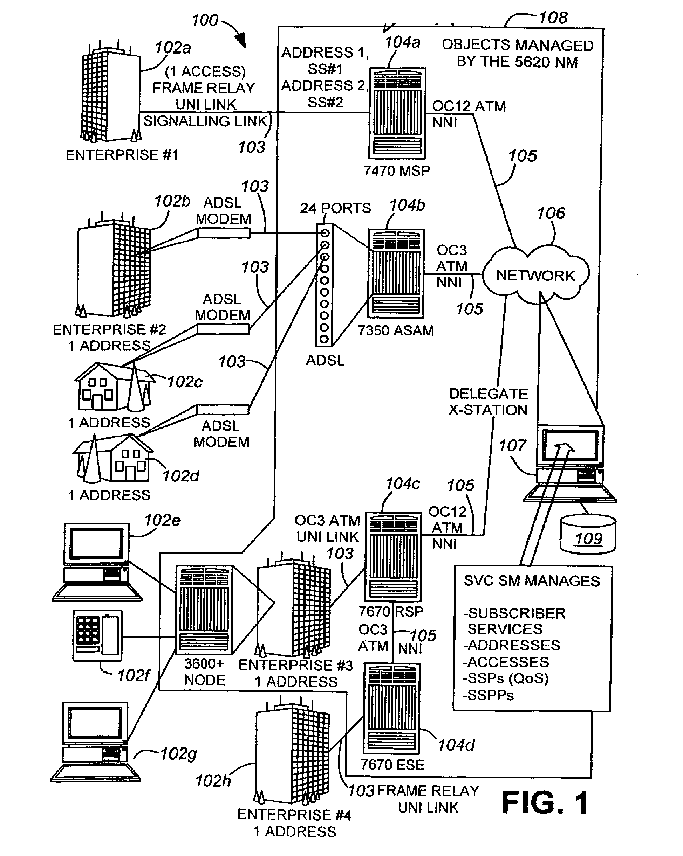

Referring to Fig. 1, shown by way of example is a communications network 100 comprising a plurality of subscribers 102a... 102h (collectively 102) connected to an access node 104a... 104d (collectively 104) by means of links 103. In turn, the access nodes 104connect the subscribers 102 to a core network 106 by means of another link 105. Each access node 104 provides switching capabilities of data to other nodes and other devices connected to the core network 106. In the embodiment, nodes 104 are ATM switches providing cell-based routing of data traffic and the subscribers are connected by a switched virtual circuit ("SVC") connection 103. It will be appreciated that other network topologies may be used. Further, node 104 may also be referred to as a network switch, a communication switch, a network element, a router and other terms known in the art.

In order for the subscribers 102 to access the core network 106, the subscribers 102 must first subscribe to a service on one of the access nodes 104. Subscriber services on the access nodes 104 are provisioned by a network manager 107 which runs an application thereon. In an embodiment, the network manager 107 may comprise, for example, a network station connected to the core network 106. In another embodiment (not shown), the network manager 107 may be directly connected to one of the access nodes 104. The network manager 107 has access to a database 109 which contains datafiles relating to configuration information of the network 100, nodes 104, subscribers 102, etc. In the embodiment, configuration commands may be entered into the network manager 107 via a GUI terminal.

For the purposes of this specification, the SVC subscriber management application running on the network manager 107 is hereinafter referred to as "SVC-SMA".

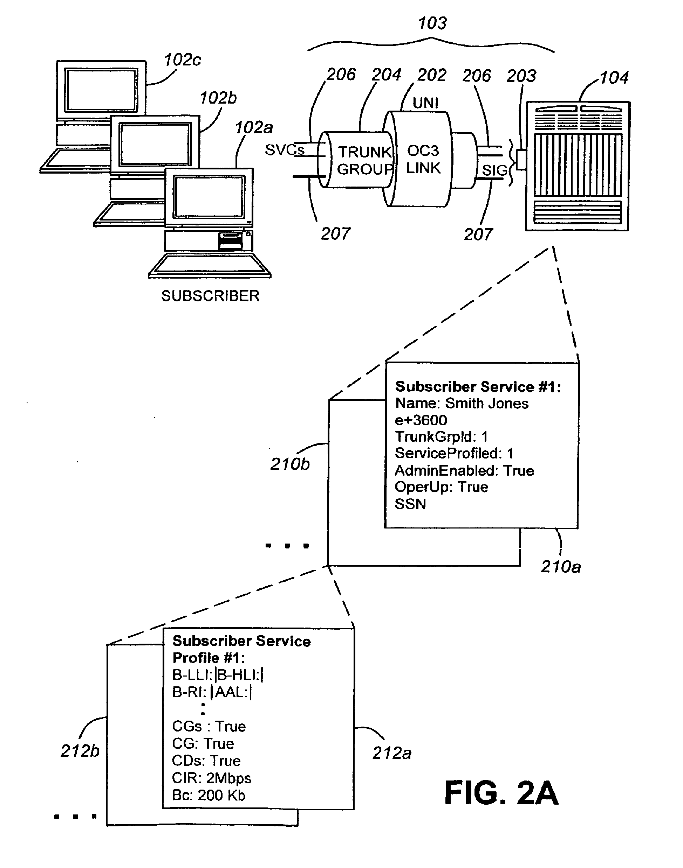

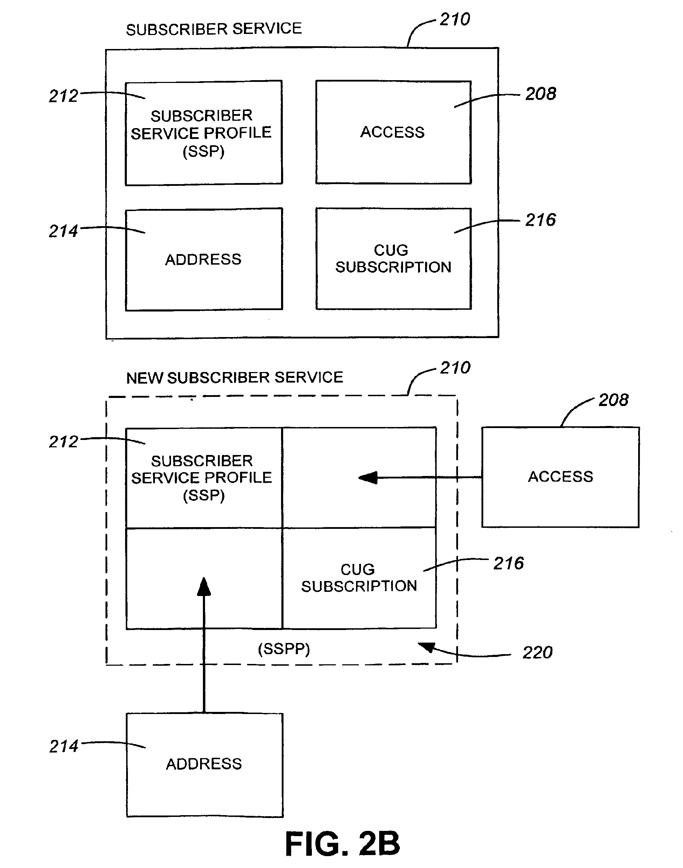

Now referring to Figs. 2A and 2B, shown is a more detailed view of a portion of the communications network 100 of Fig. 1, in which the subscribers 102 are to be connected by a link 103 to an access node 104. Signalling link 207 runs a signalling protocol between the subscriber 102 and node 104 signalling entities to exchanges messages to achieve SVC services.

As is known in the art, SVCs can be established on demand. It will be appreciated that subscriber 102 may have several SVC signalling links 207 associated with several nodes 104. Further, each node 104 may be associated with several SVC signalling links 207 from several subscribers 102.

In order to facilitate management of connection information for a node 104, connection information for a port 202 is stored in node 104 in a table. In particular, the embodiment utilizes a subscriber service configuration table stored in local memory at node 104. The subscriber service 210 provides a set of transmission service parameters associated with an access point to a node 104, i.e. port 202. Values for these and other parameters are established by a number of entities associated with a subscriber service 210. As shown in Fig. 2B, a subscriber service 210 is an association between an access 208 (embodied as a signalling link 207 as described above), an SSP 212, an address 214, and an optional set of CUG subscriptions 216. Each entity 208, 212, 214, 216 is completely independent of the other. Each entity is now described in turn.

An access 208 is associated with signalling link 207 on port 203 of node 104, records on access 208 can be used to identify the node 104 associated with signalling link 207. Accordingly, access 208 can be used to identify a subscriber service 210 associated with a particular node 104.

Address 214 is associated with a particular subscriber service 210 which in turn may be associated with a particular subscriber, 102a for example. Thus, a particular subscriber 102a may have one or more addresses associated with one or more subscriber services 210. By way of example, address 214 may contain a record of an E164, AESA or X.121 format directory number associated with subscriber 102a.It will be appreciated that for a subscriber service 210, information in access 208 combined with information in address 214 uniquely identifies the subscriber service 210. Accordingly, a subscriber 102 associated with the subscriber service 210 is uniquely identified. To illustrate the unique identification provided by the combination of access 208 and address 214, an analogy is made to a telephone number scheme and a telephone subscriber. A telephone subscriber may be uniquely identified by a telephone number and an area code. The telephone number is associated with the subscriber and the area code is associated with the area of the user. Within certain limitations, the subscriber may physically move, but still retain the same telephone number, which will be associated with one or more area codes.

Subscriber service profile or SSP 212 is another entity which specifies a set of bearer and supplementary service for a subscriber service 210. In the embodiment, SSPs 212 are locally associated with an individual node 104. However, at each node 104, each SSP 212 may be associated with or more subscriber services 210.

Optionally, a closed user group interlock code or CUG-IC profile can be associated with a subscriber services 210 to create a closed user group or CUG subscription 216. The CUG-IC profile is a means of identifying CUG membership within the network. The resulting CUG subscriptions 216 define restrictions and privileges for subscriber services 210 in respect of which calls can be sent to and received from other subscriber services 210.

At the calling side, if a CUG match exists, the CUG index identifying a CUG maps to the CUG-IC for that CUG. If a CUG match exists at the called side, the CUG-IC identifying a CUG maps to the CUG index representing that CUG. CUG-IC is not an access concept, but is used to uniquely identify a CUG inside a given network.

The use of CUGs will allow the creation of multiple virtual networks within an ATM network, for example, by using different combinations of access restrictions to group subscribers in closed CUGs. Thus, members of a CUG can communicate with each other, but need additional access permissions to communicate with members of other CUGs. In an embodiment, membership to a particular CUG in the core network 106 is established by means of a CUG-IC profile described above.

Still referring to Fig. 2B, shown by way of example is an SSPP 220 having an SSP 212 and a CUG subscription 216 already configured. As will be explained further below, address 214 and access 208 are defined separately when the SSPP 220 may be used to configure a new subscriber service 210.

It will be appreciated that, for a large network 100, comprising a large number of nodes 104 and subscribers 102, a proportionately large number of subscriber services 210 and SSPs 212 would be generated. Further, as subscribers 102 are added, deleted and have their services amended for nodes 104, defining attributes of any given subscriber service 210 may change dynamically and continuously.

Accordingly, in order to provision and maintain the subscriber services 210 and SSPs 212, software running on the network manager 107 performs a number of important functions. In an embodiment, the SVC-SMA running on the network manager 107 maintains information about every subscriber 102, and subscriber service 210, including any associated SSPs 212, addresses 214, accesses 208, and CUG subscriptions 216. As will be explained below, the SVC-SMA is responsible for enforcing the rules associated with those SSPs 212, and for distributing those SSPs 212 to various nodes in the core network 106, if and when necessary. CUG-IC profiles may be distributed to those various nodes in the same fashion.

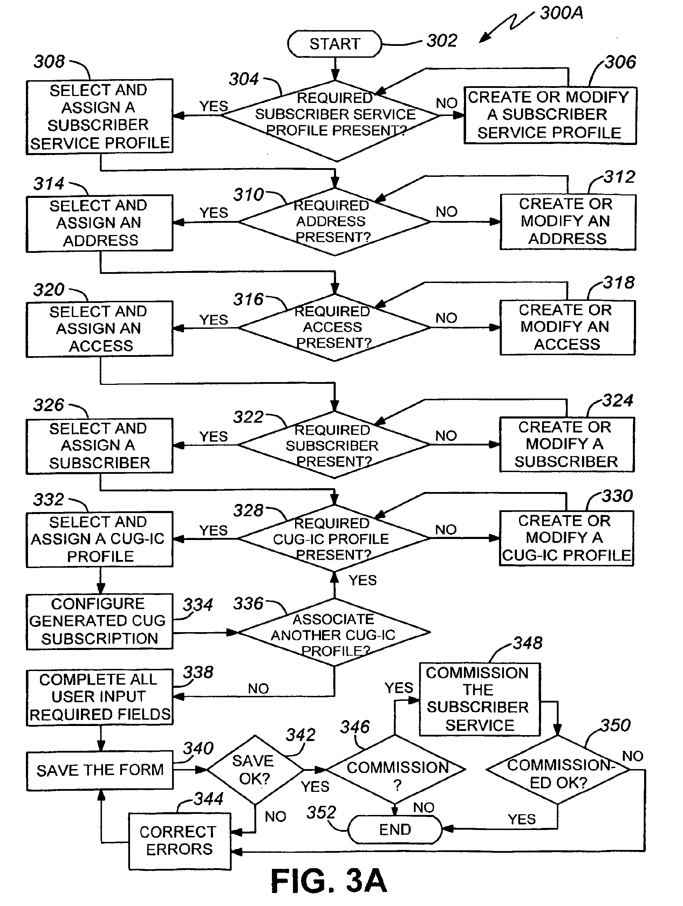

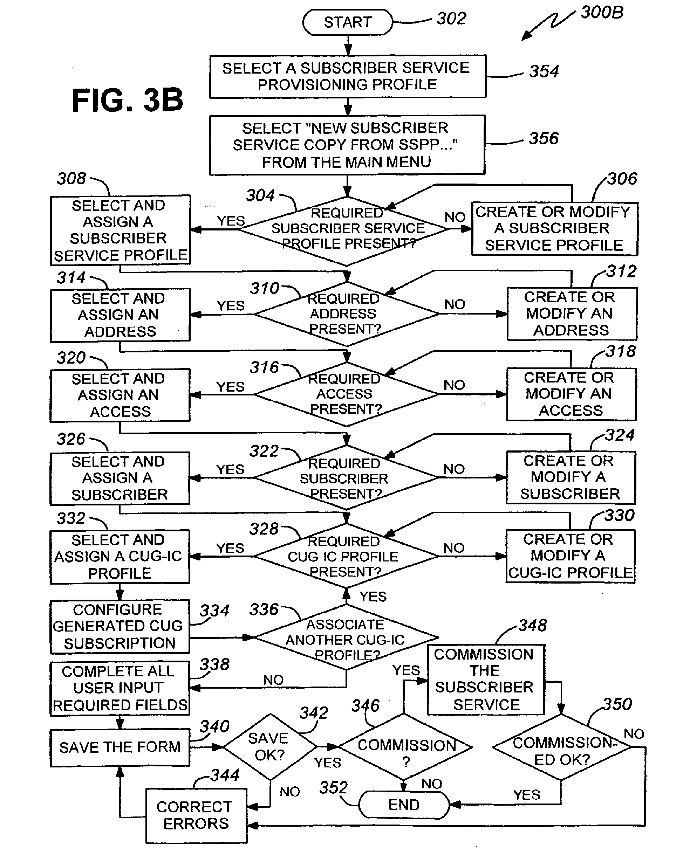

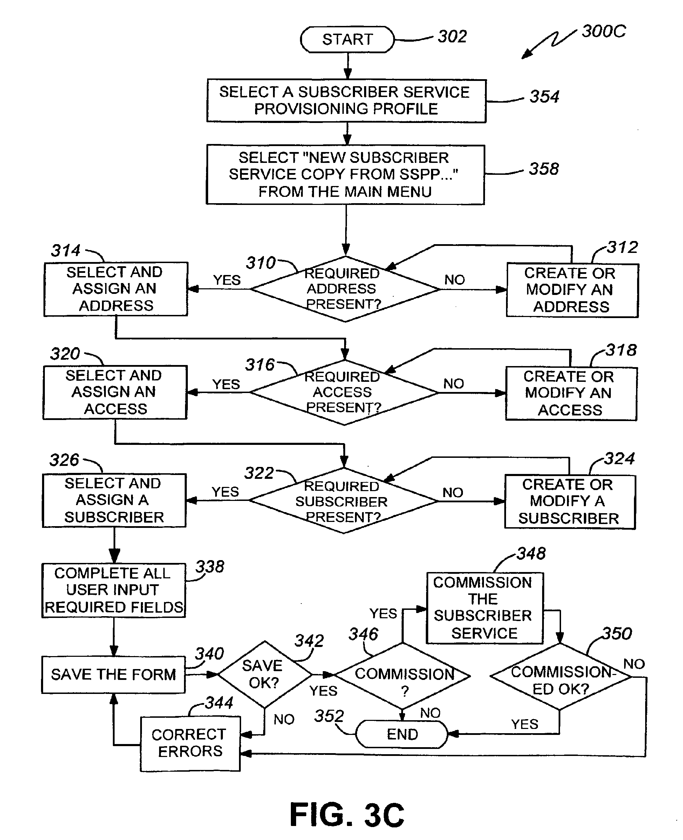

In the present embodiment, there are three different ways to provision a new subscriber service 210: 1) from scratch -- a user has to fill in all the relevant information; 2) using a "Copy From SSPP" function to copy common attributes to the SS form in which case the information copied from the SSPP 220 is editable; and 3) using a "Link To SSPP" function which links the subscription service to an SSPP 220 in which case the common information on the SS form is not editable. Each of these options for provisioning a subscriber service 210 is now shown and described by reference to Figs. 3A, 3B and 3C, respectively.

Referring to Fig. 3A, in accordance with an embodiment, shown is a process 300A for commissioning a subscriber service from scratch, using a "Blank Form" option. In an embodiment, the process 300A is carried out by the SVC-SMA on the network manager 107.

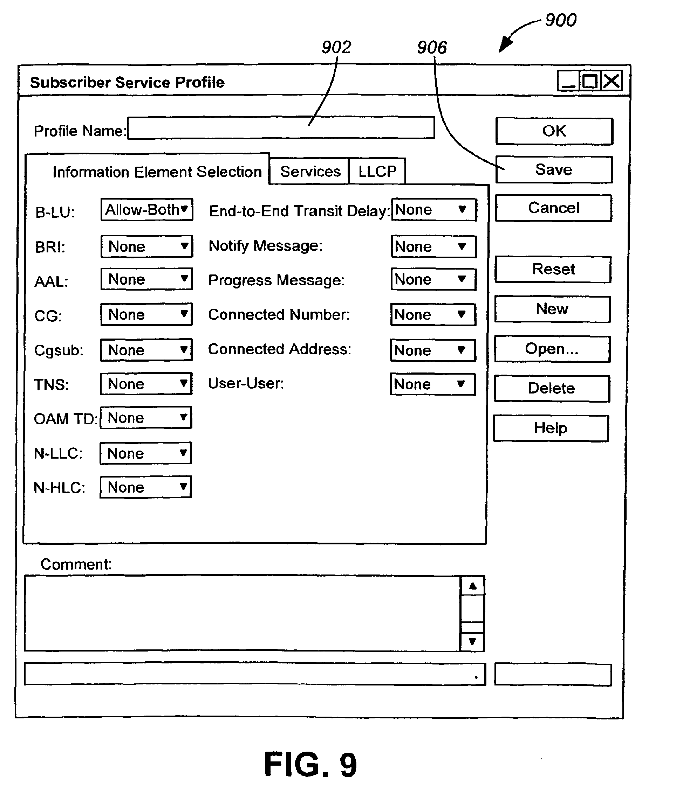

As shown, the process 300A begins at block 302 and proceeds to decision block 304 where the process 300A queries whether an SSP 212 has already been configured for the subscriber service 210. As noted above, an SSP 212 is defined as a set of bearer and supplemental services which can be assigned as a predetermined set of services to a subscriber service 210. If no SSP 212 has yet been created, the process 300 proceeds to block 306 at which the process 300 creates or configures an SSP 212, as shown by way of example in Fig. 9 further below. Block 306 returns to decision block 304 and if the answer to the query at decision block 304 is yes, process 300A proceeds to block 308 at which an SSP 212 is selected and assigned for the subscriber service 210. The process 300A then proceeds to decision block 310.

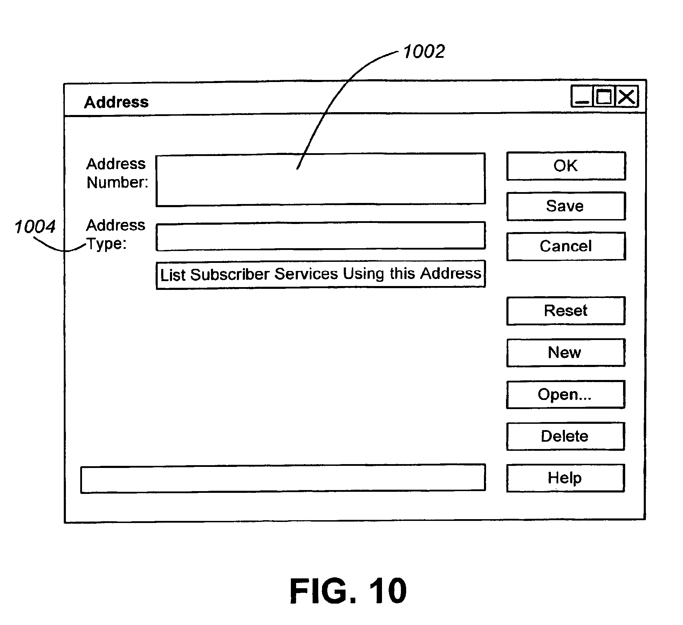

At decision block 310, process 300 queries whether an address 214 has been configured for the new subscriber service 210. By way of example, an address 214 can be provided in an E.164, AESA, or X.121 format. If the answer to the query at decision block 310 is no, process 300A proceeds to block 312 where process 300A creates or modifies an address 214, as shown by way of example in Fig. 10 further below. From block 312, process 300A returns to decision block 310, and if the answer to the query at decision block 310 is yes, process 300A proceeds to block 314. At block 314, process 300A selects and assigns an address 214 for the subscriber service 210. Process 300A then proceeds to decision block 316.

At decision block 316, process 300A queries whether the access 208 has been configured. If no, process 300A proceeds to block 318 at which the process 300A creates or modifies an access 208 on the network manager 107. From block 318, process 300A returns to decision block 316 and, if the answer to the query at decision block 316 is yes, process 300A then proceeds to block 320.

At block 320, process 300 selects and assigns an access 208 for the subscriber service 210. Process 300A then proceeds to decision block 322 at which process 300A queries whether the required subscriber 102 is present. If the answer to the query is no, process 300A proceeds to block 324 at which point process 300A creates or modifies a subscriber 102. Process 300A then returns to decision block 322 and, if the answer to the query at decision block 322 is yes, process 300A then proceeds to block 326. At block 326, process 300A selects and assigns a subscriber 102 for the subscriber service 210.

From block 326, process proceeds to decision block 328 at which process 300A queries whether a required CUG-IC profile is present. If the answer to the query is no, process 300A proceeds to block 330 at which process 300A creates or modifies a CUG-IC profile. Process 300A then returns to decision block 328 and, if the answer to the query at decision block 328 is yes, process 300A then proceeds to block 332. At block 332, process 300A selects and assigns a CUG-IC profile and then proceeds to block 334. At block 334, process 300A configures a generated CUG subscription 216and then proceeds to decision block 336. At decision block 336, process 300A queries whether another CUG-IC profile is to be associated with the subscriber service 210. If so, process 300 returns to decision block 328. If not, process 300A proceeds to block 338 at which all user input required fields are completed. Process 300A then proceeds to block 340 at which all inputs are saved. The save is checked at decision block 342 and any errors are corrected at block 344. If the save is ok, process 300A proceeds to decision block 346 and queries whether the subscriber service 210 is to be provisioned. If so, the subscriber service 210 is commissioned at block 348 and checked at block 350. If the subscriber service 210 is properly commissioned, then process 300A proceeds to block 351 and ends. Otherwise, process 300A returns to block 344 where errors are corrected and the saving and commissioning process is repeated.

Now referring to Fig. 3B, shown is another process 300B for provisioning a new subscriber service 210 using a "Copy from SSPP" option. As shown, process 300B is substantially the same as process 300A except that process 300B further includes blocks 354 and 356. Process 300B proceeds to block 354 from block 302. At block 354, process 300B selects an SSPP 220 from a list. Process 300B then proceeds to block 356 at which the "Copy from SSPP" option is selected from a menu. As noted earlier, the "Copy from SSPP" pre-fills various attribute fields for provisioning a new subscriber service 210 but those copied fields are permitted to be edited. It will be appreciated that the use of an SSPP 220 for provis ioning a number of similar subscriber services 210 may result in significantly increased efficiency.

Now referring to Fig. 3C, shown is another process 300C which shares some common blocks with processes 300A and 300B. However, process 300C includes block 358 at which the "Link to SSPP" option is selected rather than the "Copy from SSPP" option selected by process 300B. Furthermore, process 300C will exclude testing whether a required SSP 212 is present and does not check whether optional CUG subscriptions 216 are present. This is because both of the SSP 212 and CUG subscription 216 entities are expected to be already defined in the SSPP 220 and cannot be modified.

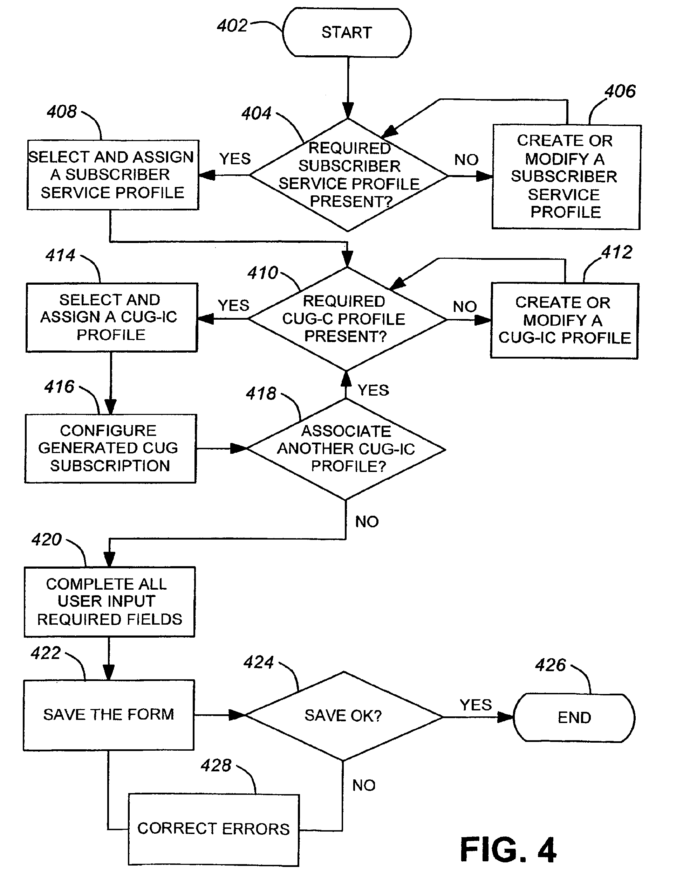

Now, referring to Fig. 4, shown is another process 400 for checking for and configuring an SSPP 220. In an embodiment, the process 400 is carried out by the SVC-SMA running on the network manager 107.

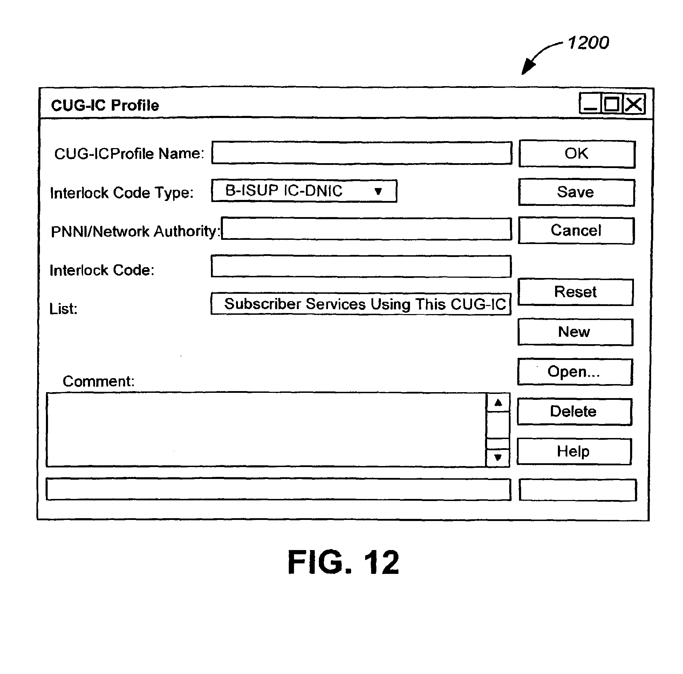

As shown in Fig. 4, process 400 begins at block 402 and proceeds to decision block 404 at which point process 400 queries whether a required SSP 212 is present. If no, process 400 proceeds to block 406 at which point process 400 creates or modifies an SSP 212. Process 400 then returns to decision block 404, and if the answer to the query at decision block 404 is yes, process 400 proceeds to block 408. At block 408, process 400 selects and assigns an SSP 212, then process 400 proceeds to decision block 410, at which point process 400 queries whether required CUG-IC profiles 216 have been configured. If the answer to the query at block 410 is no, process 400 proceeds to block 412 at which point process 400 creates one or more CUGIC profiles 216 as shown by way of example in Fig. 12 further below. Process 400 then returns to decision block 410. If the answer to the query at decision block 410 is yes, process 400 proceeds directly to block 414 at which point process 400 selects and assigns a CUG-IC profile to the subscriber service 210. Process 400 proceeds from block 414 to block 416 at which point process 400 configures a generated CUG subscription 216. From block 416, process 400 proceeds to decision block 418, at which point process 400 queries whether another CUG-IC profile is to be associated with the subscriber service 210. If yes, process 400 returns to block 410. If no, process 400 proceeds to block 420 at which point all user input required fields are completed. The form is saved at block 422 and checked at decision block 424. If the save check is ok, process 400 ends at block 426. If the save check is not ok, process 400 proceeds to block 428 at which any errors are corrected, and process 400 returns to block 422 to repeat the save and check process.

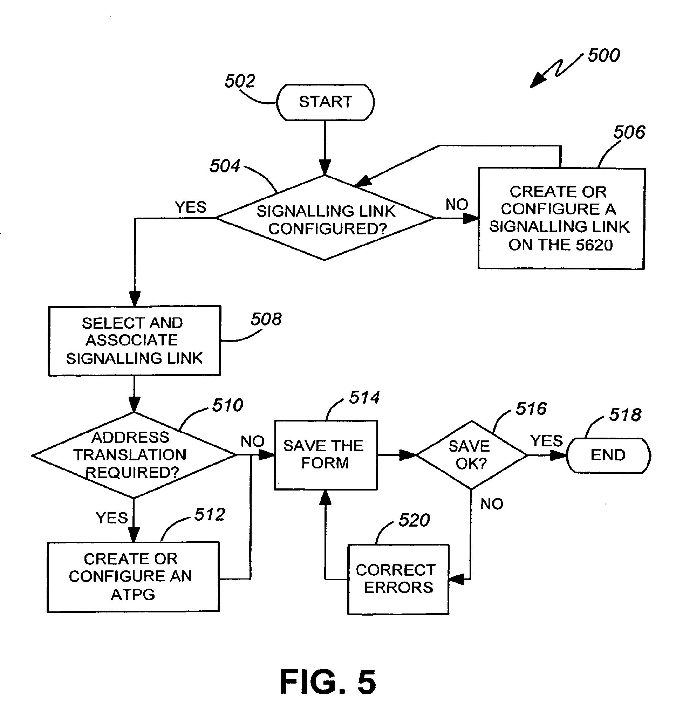

Now referring to Fig. 5, shown is another process 500 for configuring an access 208 for the subscriber service 210. In an embodiment, the process 500 is carried out by the SVC-SMA running on the network manager 107.

In Fig. 5, process 500 begins at block 502 and proceeds to decision block 504 at which point process 500 queries whether a signalling link 207 is configured. If the answer is no, process 500 proceeds to block 506 at which point a signalling link 207 is created or configured. The process 500 then returns to decision block 504. If the answer to the query at decision block is yes, process 500 proceeds to block 508 directly, at which point process 500 selects and associates a signalling link 207. From block 508, process proceeds to decision block 510 at which process 500 queries whether any address translation is required for signalling link 207. If yes, process 500 proceeds to block 512 at which point process 500 creates or configures an address translation profile group ("ATPG"). From block 512, process 500 proceeds to block 514. If the answer to the query at decision block 510 is no, process 500 proceeds directly to block 514. At block 514, the form is saved and checked at block 516. If the save is ok, process 500 ends at block 518. If the answer to the query at block 516 is no, process 500 proceeds to block 520 at which point any errors are corrected, and process 500 returns to block 514 to repeat the save and check steps.

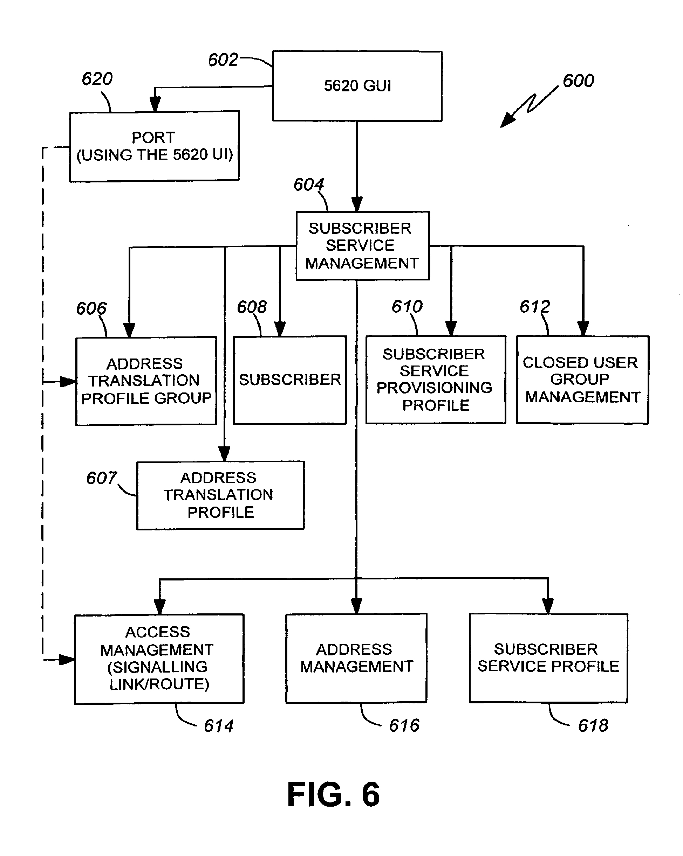

Now referring to Fig. 6, shown is a GUI navigation chart 600 of SVC-SMA processes including the processes 300, 400, 500 described above. From the main GUI 602 of the 5620 Network Manager, a user may navigate to a subscriber service management ("SSM") menu 604 which in turn provides access to any one of an ATPG form 606, an address translation profile ("ATP") form 607, a subscriber form 608, an SSPP form 610, and a CUG management form 612. From the SSM form 604, it is possible to navigate to one of an access management form 614, an address management form 616, and an SSP form 618. Port information 620 may be pasted into the SVC-SMA from the network manager 107 and into the access management form 614 and the ATPG form 606. It will be appreciated that while a particular embodiment of the SVC-SMA GUI navigation chart 600 has been shown and described, various alternative configurations are possible.

Various SVC-SMA GUI forms as mentioned above and shown in Fig. 6 are now shown and described. It will be appreciated that other forms may be used in other embodiments.

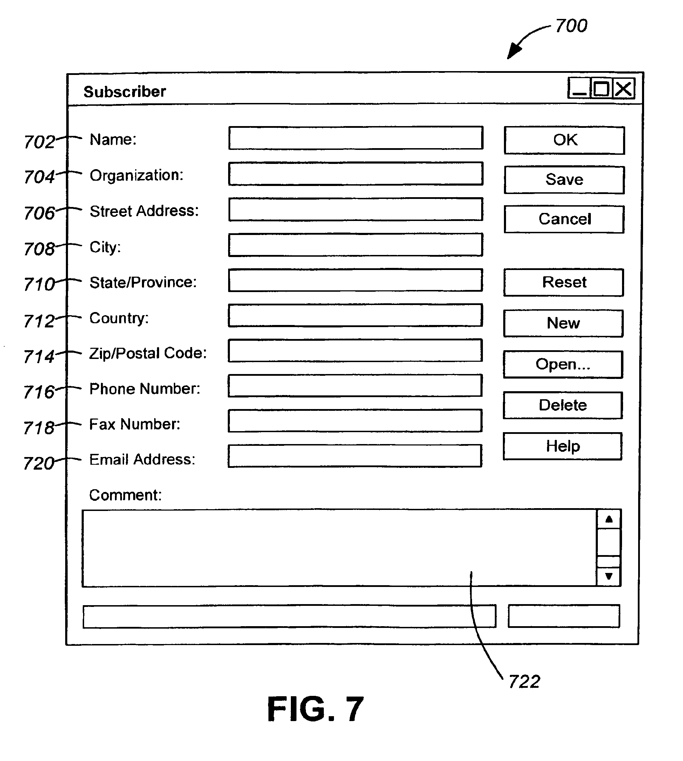

Referring to Fig. 7, shown by way of example is a subscriber form 700 used to manage SVC subscribers. In particular, the subscriber form 700 provides various input fields for subscriber attributes including, for example, name 702, organization 704, street address 706, city 708, state/province 710, country 712, ZIP/postal code 714, phone number 716, fax number 718, and e-mail address 720. An optional comment field 722 is also provided. As noted above, this subscriber information is specific to the customer and needs to be input manually in any event.

Using this subscriber form 700, a user can create a new subscriber then save it to a database on the network manager 107. The subscriber form 700 may also allow the user to view, update, and delete a subscriber 102. In other words, subscribers 102 have a network-wide scope in the core network 106. Thus, associated with each subscriber 102 is a unique subscriber ID which, in an embodiment, may have a value of 32 numeric characters. This unique subscriber ID is automatically generated by the SVC-SMA and will not be displayed to the user. In a preferred embodiment, the subscriber attributes provided in the subscriber form 700 are for administrative purposes only and are not downloaded to the various nodes in the core network 106.

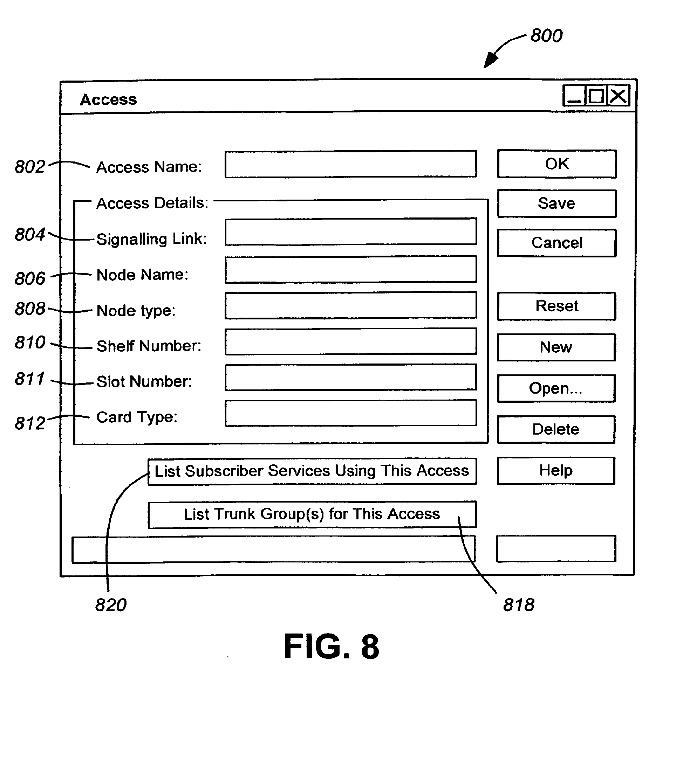

Now referring to Fig. 8, an exemplary access form 800 for configuring an access 208 is shown. In the present embodiment, an access point 202 (Fig. 2) corresponding to port 203 contains a reference to a set of trunk groups/routes 204 where the number of entries in the set is [1,n]. Generally speaking, all trunk groups/routes 204 in a given access point 202 will reside on a single access node 104. When a configured access point 202 contains more than one trunk group 204, the network manager 107 will configure a route (a logical grouping of trunk groups) on the associated node 104. A request to delete an access 208 will be refused if the access 208 is currently associated with a subscriber service.

In an embodiment, the UNI access point 202 (Fig. 2) contains a plurality of trunk groups 204, corresponding to virtual paths in the network 106, coming from the same network user interface. Also, the accesses 208 are port specific. An access 208 can be associated with more than one subscriber service 210. Thus, these subscriber services 210 would be residing on the same physical node, even though they might be assigned to different subscribers 102. In an embodiment, an access 208 is created by pasting in an available signalling link 207 or route directly from a port 203 of an access node 104 (Fig. 1). In an embodiment, the SVC-SMA will display all signalling links or accesses 208 on that port 203, and the user can click on the "Assign" button 822 to set a specific signalling link 207 as the access 208.

Still referring to Fig. 8, when an access 208 is created by pasting in a signalling link 207 from the list of signalling links 804, the signalling link 207 will define the node name 806, node type 808, card shelf number 810, card slot number 811, card type 812, and currently assigned trunk groups 818. An access name 802 may be specified by the user. Optionally, a list of subscriber services 820 to which the access name 802 is associated may be provided as well.

Now referring to Fig. 9, shown is an exemplary subscriber service profile or SSP management form 900 for specifying a set of bearer and supplementary services, which can be assigned as a predefined set of services to an SVC subscriber service.

For example, each switch 104 may have a set of local SSPs 212 which are node specific. The SVC-SMA will manage a pool of, say, one thousand SSPs 212, and when any one of these is sent down to the access node 104, the node 104 will map it to one of its local SSPs 212. As will be appreciated, this provides freedom and flexibility in setting up network wide profiles.

The SVC-SMA may support a larger set of SSPs 212 than what is on the nodes, the maximum number supported being node specific. An SSP 212 will only be sent to a node if a subscriber service 210 using that SSP 212 is commissioned on that node. When the last subscriber services 210 on a node using a particular SSP 212 is deleted, then the SSP 212 is also deleted from the node. Any change to an SSP 212 made from a node will not result in refreshing the network manager 107 copy of that profile. Consequently, the network manager 107 will not update the corresponding SSP 212 on all network nodes.

As shown in Fig. 9, the SSP form 900 allows the user to open a list of SSPs 212 and select an SSP 212 from that list. This form 900 also allows the user to change any of the profile settings and then save the SSP 212 back to the database 109. When the user clicks the save button 906, the SSP 212 is sent down to all nodes using that SSP 212, thus keeping the SSPs 212 in the database 109 and in the nodes in sync.

Significantly, rather than updating all the nodes of the entire network with the changed SSP 212, only the nodes using that SSP 212 are updated. When an SSP 212 changes, the SVC-SMA will first identify all commissioned subscriber services that are associated with that SSP 212 or associated with an SSPP 220 that is associated with that changed SSP 212. It will then use the access 208 of each of these subscriber services to determine which nodes need to be refreshed with the new SSP 212.

Now referring to Fig. 10, an address form 1000 is shown. As explained above, in accordance with an embodiment, each subscriber service requires an address 214 associated with that subscriber service. An address 214 may contain, for example, E.164, AESA, or X.121 formatted directory numbers. An address 214 is not node-specific. However, an address 214 combined with an access 208 does make a subscriber service unique.

By way of example, the attributes available for an address object 214 may include an address number 1002 and an address type 1004. In an embodiment, the same address number 1002 may be used at different accesses (which may be used on different nodes). Generally speaking, an address 214 should not be deleted if it is associated with a subscriber service. Therefore, a user should be able to list all subscriber services using a particular address 214 so that the subscriber service can be deleted, or their addresses 214 changed to another address 214, before deleting a particular address 214.

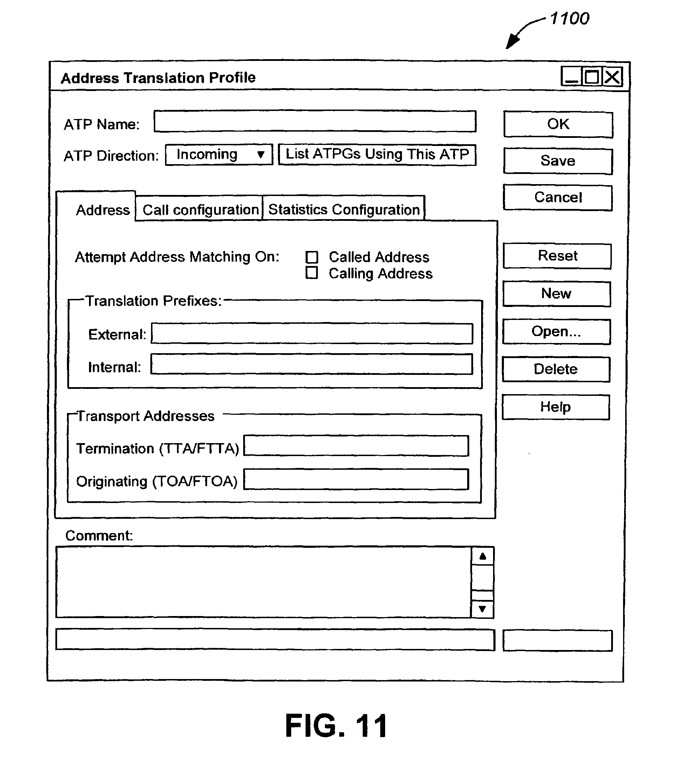

Now referring to Fig. 11, in an embodiment, the network manager 107 may support an address translation profile ("ATP") which is associated with one or more address translation profile groups ("ATPGs") which are in turn associated with one or more signalling links 207. By way of example, the farm 1100 in Fig. 11 is used to configure an ATP. As known to those skilled in the art, address translation is the process of re-mapping called and/or calling party addresses received on signalling link 207. This re-mapping may involve converting an address from one numbering plan identifier ("NPI")/type of number ("TON") to another and/or manipulating digits.

By way of further example, ATM signalling requires addressing in E.164 international or AESA numbering plans. Address translation occurs on both addressing plans independently. Address translation is required because equipment or services external to the nodes does not always use the same address formats. Thus, address translation converts called and calling party addresses sent and received on signalling links to a supported address format; and inserts, removes and modifies address digits, or translates TON and NPI values. Address translation takes the received foreign addresses and maps them to routable addresses for routing within and across an ATM network. Address translation also takes routable addresses and maps them to foreign addresses for routing outside the ATM network. Foreign addresses are addresses used to route calls by services external to the ATM network. Routable addresses are addresses used to route calls through an ATM network.

Now referring to Fig. 12, shown is a CUG-IC profile form 1200 which may provide a supplementary service that allows a user to create multiple private virtual networks in an ATM network. As explained earlier, a CUG-IC profile may be associated to a subscriber service 210 to create a CUG subscription 216. Different combinations of access restrictions can be used to control communication between CUG members and non-members.

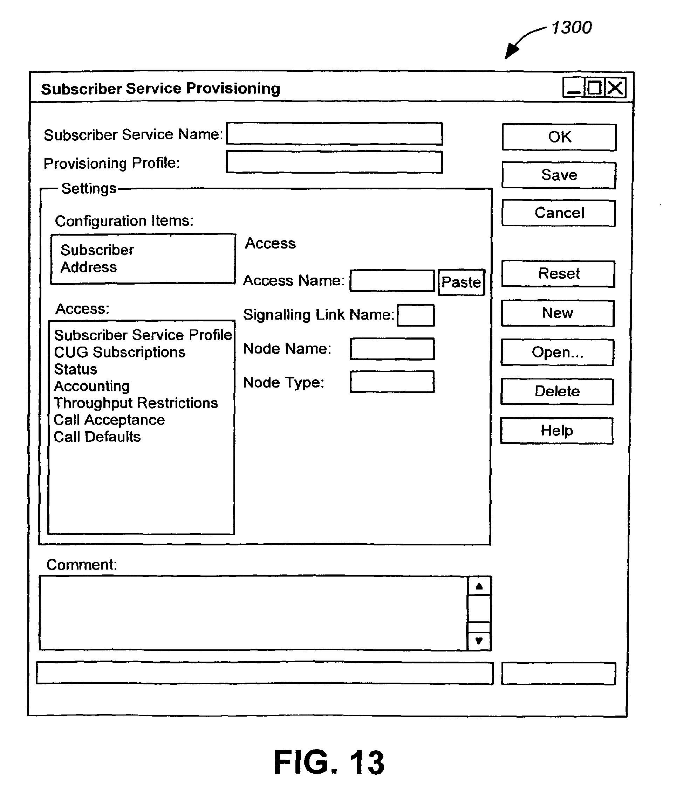

Now referring to Fig. 13, shown is a subscriber service form 1300 which is used to configure a subscriber service. In accordance with a preferred embodiment, configuring a new subscriber service may involve selecting an SSPP 220 to be used by the subscriber service. The SSPP 220 will be used to set default values for the subscriber service attributes.

As noted earlier, a subscriber service is an association between an SSP 212, an access 208, an address, and an optional set of CUG subscriptions 216.

Because a subscriber service need not be associated with a subscriber, the name of the subscriber service will just be empty. However, if it is associated with a subscriber, the name of the subscriber service will be the name of the subscriber. In accordance with an embodiment, the following steps need to be performed for commissioning a subscriber service: 1) create a subscriber service 210; 2) associate a subscriber 102 with the subscriber service 210; 3) associate an SSP 212 with the subscriber service 210; 4) associate an address 214 with the subscriber service 210; 5) associate an access 208 with the subscriber service 210; and associate CUG-IC profiles to create CUG subscriptions 216.

As noted earlier, there are three ways to create a subscriber service: 1) from scratch -- a user has to fill in all the relevant information; 2) using an SSPP 220 "Copy From" function to copy common information to the SS form and allow the copied information to be editable; and 3) using an SSPP "Link To" function which will link the SS to the SSPP 220 and the common information on the SS form is not editable.

In an embodiment, the subscriber service attributes may comprise the following:

**TABLE D**

| **#** | **Attribute Name** | **Values** | **Description** |
|---|---|---|---|
| 1 | Subscriber Service ID | Unique Identifier | The Subscriber Service Identifier. **Read-only Attribute.** Automatically generated and unique |
| 2 | Subscriber Service Provisioning Profile | Provisioning Profile ID/None | Identifies the Provisioning Profile that may be used for this Subscriber Service. |
| | | | |

By way of example, in order to create a new subscriber service from scratch, a network administrator may select from the "Administration ? SVC Subscriber Management ? New ? Subscriber Service" Menu the "Blank Form" menu item. To create a subscriber service from an SSPP 220 where the common information is copied, the network administrator may instead select the "Copy from SSPP" menu item. Finally, to create a subscriber service linked to an SSPP 220, the network administrator may select the "Link to SSPP" menu item.

To save the newly created subscriber service, the save button is pressed. Saving a subscriber service is not enough to send the information to the nodes since it just saves it in the database, keeping the nodes still unaware of the new subscriber service. To send the information down to the nodes so that the subscriber service is actually established on the nodes, the user will have to choose to "Commission". To remove the subscriber service from the node but keep it in the database, the user will have to "Decommission". The association between a subscriber, an SSP 212, an address 214, an access 208, and an optional set of CUGs is made clear to the user setting up the subscriber service in different panels of the subscriber service form.

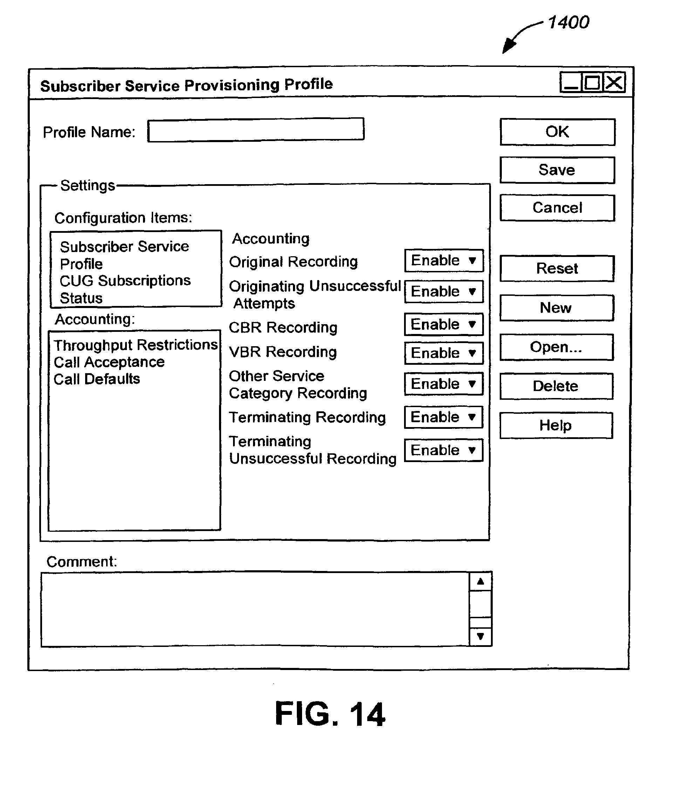

Finally, referring to Fig. 14, shown is an exemplary form 1400 for completing an SSPP 220. As explained above, an SSPP 220 facilitates the configuration and commissioning of subscriber services by assigning values to the attributes associated with a subscriber service. Once the provisioning profile is created and configured, a subscriber service can be created by simply associating it with an SSPP 220, thus providing a quick way of filling in all the attributes of the subscriber service.

As noted above, subscriber service has been defined as an association between an SSP 212, an access, an address 214 and a subscriber and sometimes a set of CUG subscriptions 216. On the other hand, an SSPP 220 will only be associated with an SSP 212 and a set of CUG subscriptions 216. When a subscriber service is created using the "Link to SSPP" option, the SSP 212, CUG subscriptions 216, and general SSPP settings will be set and displayed in read-only mode. The user will still be able to edit all other attributes of the subscriber service. If the subscriber service is created using the "Copy from SSPP" option, all settings are editable.

The Attributes of a subscriber service provisioning profile are listed below:

| **#** | **Attribute Name** | **Values** | **Description** |
|---|---|---|---|
| 1 | Name | Alpha-numeric characters | Name of subscriber paying for SVC subscriber service services. Mandatory. May be non-unique. |
| 2 | ID | Alpha-numeric characters | Mandatory and unique identifier. Automatically generated |
| 3 | Subscriber service Profile | 1 - 65 | Subscriber service profile associated with this subscriber service provisioning profile |
| 4 | CUG-IC Subscriptions | CUG sub-ID's | A list of the CUG-IC subscriptions associated with the SSPP |

To assign an SSP 212 to an SSPP 220, the user will select a SSP 212 from a list and "Paste" the SSP 210 into the SSPP form. In a similar way, a set of CUGIC profiles can be assigned to an SSPP 220 under the CUG panel to create a CUG subscription 216. SSPPs 220 can thus be used when creating or configuring a subscriber service as described above. It will be understood that any change to an SSPP 220 will affect the subscriber services that were created using that SSPP 220 by linking to it. Thus, when an SSPP 220 attribute of multiple subscriber services associated with that SSPP 220 need to be modified, only one modification by the user is required.

It is noted that those skilled in the art will appreciate that various modifications of detail may be made to the present embodiment, all of which would come within the scope of the invention.

## Claims

1. A method of provisioning communication service attributes for a subscriber (102) accessing a node (104) in a communication network (100), comprising:
- creating a subscriber service profile (212), defined by a set of service attributes, each of said attributes being assigned a value;
- selectively associating a subscriber service profile (212) with a particular subscriber (102) for access to said communication network (100);
- requesting access to a service on an access node (104) of the communication network (100) by providing an address (214) identifying the subscriber and an access attribute (208); and
- configuring a subscriber service (210);
**characterized in that** said configuring step comprises associating to said subscriber service (210): the address (214) identifying the subscriber, the access attribute (208) identifying a point of entry at the access node (104), and a subscriber service profile (212) that includes service attributes defining the service.

2. The method of claim 1, further comprising using a subscriber service provisioning profile (220) for provisioning multiple subscriber services (210) with a similar set of service attributes.

3. The method of claim 1 or 2, wherein two or more subscriber services (210) share the same subscriber service profile (212).

4. The method of any one of claims I to 3, wherein if the subscriber service (210) is not available at the access node (104), it further comprises configuring the subscriber service (210) by copying (506) the set of service attributes from an existing subscriber service (210).

5. The method of claim 3 or 4, wherein the service attributes of the set are editable.

6. The method of any one of claims 1 to 5, wherein if the subscriber service (210) is not available at the access node (104), it further comprises the step of configuring the subscriber service (210) by linking (358) the set of service attributes from existing subscriber services (210).

7. The method of claim 1, wherein the attributes are not editable.

8. The method of any one of claims I to 7, further comprising creating a closed user group subscription by associating a closed user group interlock code (CUG-IC) with the subscriber services (210), wherein said closed user group subscription defines restrictions and privileges for enabling interaction of the subscriber services with other subscriber services.

9. The method of any one of claims 1 to 8, further comprising maintaining the subscriber service profile (212) and distributing that subscriber service profile (212) to all nodes where a subscriber service (210) using that subscriber service profile (212) is commissioned.

10. The method of any one of claims 1 to 9, wherein a change to a subscriber service profile (212) or to a subscriber service provisioning profile (220) causes updates to all subscriber services (210) associated with that subscriber service profile (212) or with that subscriber service provisioning profile (220), and distributes the update to all nodes on which the subscriber services (210) associated with that subscriber service profile (212) or with that subscriber service provisioning profile (220) are commissioned.

11. A system for provisioning communication service attributes for a subscriber (102) accessing a node (104) in a communication network (100), comprising:
- a database containing subscriber service profiles (212), each defined by a set of service attributes, each of said attributes being assigned a value;
- a subscriber application having access to said database for selectively associating a subscriber service profile (212) with a particular subscriber (102) for access to said communication network (100),
- a point of entry at the access node (104) identified by an access attribute (208), for enabling a subscriber (102) identified by an address (214) to gain access to a service from that point of entry,
**characterised in that** a subscriber service (210) is adapted to associate the access attribute (208) with the address (214) identifying the subscriber (102) and with a subscriber service profile (212) that includes service attributes defining the service, for delivering the service requested by the subscriber (102).

12. The system of claim 11, wherein a subscriber service provisioning profile (220) is used for provisioning multiple subscriber services (210) with a similar set of attributes.

13. The system of claim 11 or 12, wherein the access attribute (208) is provided by signalling means (207) operative between the point of entry at the access node (104) and the subscriber (102).

14. The system of anyone of claims 11 to 13, further comprising a closed user group subscription, and means adapted to associate a closed user group interlock code (CUG-IC) with the subscriber services (210), wherein the closed user group subscription defines restrictions and privileges that enable the subscriber service to interact with other subscriber services.

## Patentansprüche

1. Verfahren zum Bereitstellen von Kommunikationsdienstattributen für einen Teilnehmer (102), der auf einen Knoten (104) in einem Kommunikationsnetz (100) zugreift, wobei das Verfahren umfasst:
- Erzeugen eines Teilnehmer- Dienstprofils (212), definiert durch einen Satz von Dienstattributen, wobei jedem der besagten Attribute ein Wert zugeordnet wird;
- selektives Verknüpfen eines Teilnehmer-Dienstprofils (212) mit einem bestimmten Teilnehmer (102) für den Zugang zum besagten Kommunikationsnetzwerk 100;
- Anforderung eines Zugangs zu einem Dienst bei einem Zugangsknoten (104) des Kommunikationsnetzwerks 100 durch Bereitstellen einer Adresse (214), die den Teilnehmer und ein Zugangsattribut (208) identifiziert; und
- Konfigurieren eines Telnehmerdienstes (210);
**dadurch gekennzeichnet, dass** der besagte Konfigurierschritt umfasst, dass mit dem besagten Teilnehmerdienst (210) verknüpft werden:
- die Adresse (214), die den Teilnehmer identifiziert, das Zugangsattribut (208), das einen Eintrittspunkt am Zugangsknoten (104) identifiziert, und
- ein Teilnehmer- Dienstprofil (212), das die Dienstattribute einschließt, die den Dienst definieren.

2. Verfahren nach Anspruch 1, das weiterhin ein Teilnehmer-Dienstbereitstellungsprofil (220) umfasst zur Bereitstellung von Mehrfach- Teilnehmerdiensten (210) mit einem ähnlichen Satz von Dienstattributen.

3. Verfahren nach Anspruch 1 oder 2, wobei zwei oder mehr Teilnehmerdienste (210) das gleiche Teilnehmer-Dienstprofil (212) gemeinsam nutzen.

4. Verfahren nach einem der Ansprüche 1 bis 3, wobei, wenn der Teilnehmerdienst (210) am Zugangsknoten (104) nicht zur Verfügung steht, das Verfahren weiterhin das Konfigurieren des Teilnehmerdienstes (210) durch Kopieren (506) des Satzes von Dienstattributen von einem existierenden Teilnehmerdienst (210) umfasst.

5. Verfahren nach Anspruch 3 oder 4, wobei die Dienstattribute des Satzes editierbar sind.

6. Verfahren nach einem der Ansprüche 1 bis 5, wobei, wenn der Teilnehmerdienst (210) am Zugangsknoten (104) nicht zur Verfügung steht, das Verfahren weiterhin den Schritt des Konfigurierens des Teilnehmerdienstes (210) durch Verbinden (Link) 358 des Satzes von Dienstattributen mit existierenden Teilnehmerdiensten (210) umfasst.

7. Verfahren nach Anspruch 1, wobei die Attribute nicht editierbar sind.

8. Verfahren nach einem der Ansprüche 1 bis 7, wobei das Verfahren weiterhin das Erzeugen einer geschlossenen Teilnehmergruppenmitgliedschaft durch Verknüpfen eines Interlock- Codes (CUG- IC) einer geschlossenen Teilnehmergruppe mit den Teilnehmerdiensten (210) umfasst, wobei die besagte geschlossene Teilnehmergruppenmitgliedschaft Restriktionen und Privilegien definiert für das Ermöglichen von Interaktion von Teilnehmerdiensten mit anderen Teilnehmerdiensten.

9. Verfahren nach einem der Ansprüche 1 bis 8, wobei das Verfahren weiterhin die Pflege des Teilnehmer-Dienstprofils (212) und das Verteilen dieses Teilnehmer- Dienstprofils (212) an alle Knoten umfasst, bei denen ein Teilnehmerdienst (210) in Auftrag gegeben ist, der dieses Teilnehmer- Dienstprofil (212) benutzt.

10. Verfahren nach einem der Ansprüche 1 bis 9, wobei eine Änderung eines Teilnehmer- Dienstprofils (212) oder eines Teilnehmer- Dienstbereitstellungsprofils (220) die Aktualisierung aller Teilnehmerdienste (210) verursacht, die mit dem Teilnehmer- Dienstprofil (212) oder dem Teilnehmer- Dienstbereitstellungsprofil (220) verknüpft sind, und das verteilen dieser Aktualisierung an alle Knoten umfasst, bei denen die Teilnehmerdienste (210) in Auftrag gegeben sind, die mit diesem Teilnehmer-Dienstprofil (212) oder Teilnehmer-Dienstbereitstellungsprofil (220) verknüpft sind.

11. System zum Bereitstellen von Kommunikationsdienstattributen für einen Teilnehmer (102), der auf einen Knoten (104) in einem Kommunikationsnetzwerk (100) zugreift, bestehend aus:
- einer Datenbank, die die Teilnehmer- Dienstprofile (212) enthält, wobei jedes durch einen Satz von Dienstattributen definiert wird, wobei jedem der besagten Attribute ein Wert zugeordnet wird;
- einer Teilnehmeranwendung, die zur der besagten Datenbank Zugang hat für das selektive Verknüpfen eines Teilnehmer- Dienstprofils (212) mit einem bestimmten Teilnehmer (102) für den Zugang zu dem besagten Kommunikationsnetzwerk 100;
- einem Eintrittspunkt bei diesem Zugangsknoten (104), der durch ein Zugangsattribut (208) identifiziert wird, um einem Teilnehmer (102), der durch eine Adresse (214) identifiziert wird, Zugang zu einem Dienst von diesem Eintrittspunkt zu ermöglichen,
**dadurch gekennzeichnet, dass** ein Teilnehmerdienst (210) eingerichtet ist, die Zugangsattribute (208) mit der Adresse (214) zu verknüpfen, die den Teilnehmer (102) identifiziert, und mit einem Teilnehmer- Dienstprofil (212), das Dienstattribute enthält, die den Dienst definieren, zur Übermittlung des Dienstes, der vom Teilnehmer (102) angefordert wurde.

12. System nach Anspruch 11, wobei ein Teilnehmer-Dienstbereitstellungsprofil (220) benutzt wird, um Teilnehmer- Mehrfachdienste (210) mit einem ähnlichen Satz von Attributen bereitzustellen.

13. System nach Anspruch 11 oder 12, wobei das Zugangsattribut (208) bereitgestellt wird durch Signalisierungsmittel (207), die zwischen dem Eintrittspunkt am Zugangsknoten (104) und dem Teilnehmer (102) betrieben werden.

14. System nach einem der Ansprüche 11 bis 13, das weiterhin umfasst eine geschlossene Teilnehmergruppenmitgliedschaft und Mittel, die eingerichtet sind zum Verknüpfen eines Interlock- Codes (CUG- IC) einer geschlossenen Teilnehmergruppe mit den Teilnehmerdiensten (210), wobei die geschlossene Teilnehmergruppenmitgliedschaft Restriktionen und Privilegien definiert für das Ermöglichen von Interaktion von Teilnehmerdiensten mit anderen Teilnehmerdiensten.

## Revendications

1. Procédé d'approvisionnement d'attributs de service de communication pour un abonné (102) accédant à un noeud (104) dans un réseau de communication (100), comprenant les étapes consistant à :
- créer un profil de service d'abonné (212), défini par un ensemble d'attributs de service, à chacun desdits attributs étant assignée une valeur ;
- associer sélectivement un profil de service d'abonné (212) à un abonné particulier (102) pour accéder audit réseau de communication (100) ;
- demander l'accès à un service sur un noeud d'accès (104) du réseau de communication (100) en fournissant une adresse (214) identifiant l'abonné et un attribut d'accès (208) ; et
- configurer un service d'abonné (210) ;
**caractérisé en ce que** ladite étape de configuration comprend l'association audit service d'abonné (210) de : l'adresse (214) identifiant l'abonné, l'attribut d'accès (208) identifiant un point d'entrée au noeud d'accès (104), et un profil de service d'abonné (212) qui comprend des attributs de service définissant le service.

2. Procédé selon la revendication 1, comprenant en outre l'utilisation d'un profil d'approvisionnement de service d'abonné (220) pour approvisionner des services d'abonné multiples (210) avec un ensemble similaire d'attributs de service.

3. Procédé selon la revendication 1 ou 2, dans lequel deux services d'abonné (210) ou plus partagent le même profil de service d'abonné (212).

4. Procédé selon l'une quelconque des revendications 1 à 3, dans lequel si le service d'abonné (210) n'est pas disponible au noeud d'accès (104), il comprend en outre la configuration du service d'abonné (210) par copie (506) de l'ensemble d'attributs de service d'un service d'abonné existant (210).

5. Procédé selon la revendication 3 ou 4, dans lequel les attributs de service de l'ensemble sont modifiables.

6. Procédé selon l'une quelconque des revendications 1 à 5, dans lequel si le service d'abonné (210) n'est pas disponible au noeud d'accès (104), il comprend en outre l'étape consistant à configurer le service d'abonné (210) par liaison (358) de l'ensemble d'attributs de service de services d'abonné existants (210).

7. Procédé selon la revendication 1, dans lequel les attributs ne sont pas modifiables.

8. Procédé selon l'une quelconque des revendications 1 à 7, comprenant en outre la création d'un abonnement de groupe fermé d'utilisateurs en associant un code de verrouillage de groupe fermé d'utilisateurs (CUG-IC) aux services d'abonné (210), dans lequel ledit abonnement de groupe fermé d'utilisateurs définit des restrictions et privilèges pour permettre l'interaction des services d'abonné avec d'autres services d'abonné.

9. Procédé selon l'une quelconque des revendications 1 à 8, comprenant en outre la conservation du profil de service d'abonné (212) et la distribution de ce profil de service d'abonné (212) à tous les noeuds auxquels un service d'abonné (210) utilisant ce profil de service d'abonné (212) est mis en service.

10. Procédé selon l'une quelconque des revendications 1 à 9, dans lequel une modification d'un profil de service d'abonné (212) ou d'un profil d'approvisionnement de service d'abonné (220) cause des mises à jour de tous les services d'abonné (210) associés audit profil de service d'abonné (212) ou audit profil d'approvisionnement de service d'abonné (220), et distribue la mise à jour à tous les noeuds sur lesquels les services d'abonné (210) associés à ce profil de service d'abonné (212) ou à ce profil d'approvisionnement de service d'abonné (220) sont mis en service.

11. Système pour approvisionner des attributs de service de communication pour un abonné (102) accédant à un noeud (104) dans un réseau de communication (100), comprenant :
- une base de données contenant des profils de service d'abonné (212), chacun étant défini par un ensemble d'attributs de service, à chacun desdits attributs étant assignée une valeur ;
- une application d'abonné ayant accès à ladite base de données pour associer sélectivement un profil de service d'abonné (212) à un abonné particulier (102) pour accéder audit réseau de communication (100),
- un point d'entrée au noeud d'accès (104) identifié par un attribut d'accès (208), pour permettre à un abonné (102) identifié par une adresse (214) de pouvoir accéder à un service depuis ce point d'entrée,
**caractérisé en ce qu'**un service d'abonné (210) est adapté pour associer l'attribut d'accès (208) à l'adresse (214) identifiant l'abonné (102) et à un profil de service d'abonné (212) qui comprend des attributs de service définissant le service, pour fournir le service demandé par l'abonné (102).

12. Système selon la revendication 11, dans lequel un profil d'approvisionnement de service d'abonné (220) est utilisé pour approvisionner des services d'abonné multiples (210) avec un ensemble d'attributs similaires.

13. Système selon la revendication 11 ou 12, dans lequel l'attribut d'accès (208) est fourni par des moyens de signalisation (207) opérationnels entre le point d'entrée au noeud d'accès (104) et l'abonné (102).

14. Système selon l'une quelconque des revendications 11 à 13, comprenant en outre un abonnement de groupe fermé d'utilisateurs, et des moyens adaptés pour associer un code de verrouillage de groupe fermé d'utilisateurs (CUG-IC) aux services d'abonné (210), dans lequel l'abonnement de groupe fermé d'utilisateurs définit des restrictions et privilèges qui permettent au service d'abonné d'interagir avec d'autres services d'abonné.
